# EUROPÄISCHE PATENTANMELDUNG

(11) **EP 3 696 928 A1**
(43) Veröffentlichungstag der Anmeldung: **19.08.2020**
(21) Anmeldenummer: 19157413.6
(22) Anmeldetag: 15.02.2019
(51) Int. Cl.: H02J 1/02, H02J 1/10

(54) **ENERGIEVERSORGUNGSNETZWERK**

(71) Anmelder: Siemens Aktiengesellschaft, 80333 München (DE)
(72) Erfinder: Handt, Karsten, 92348 Berg (DE); Niedenzu, Wolfgang, 93309 Kelheim (DE); Nielebock, Sebastian, 91301 Forchheim (DE); Pfeifer, Markus, 90455 Nürnberg (DE); Weidauer, Jens, 90763 Fürth (DE)

(57) **Zusammenfassung**

Die Erfindung beschreibt ein Energieversorgungsnetzwerk, umfassend und eine Busleitung (1) zur Energieverteilung sowie eine Anzahl an Komponenten (10, 11, 20, 21, 22, 23, 30, 31), die über eine Kopplungsleitung (2-9) jeweils entweder direkt oder über einen zugeordneten leistungselektronischen Wandler (15, 16, 25, 26, 27, 35), der eine Zwischenkreiskapazität umfassen kann, an die Busleitung (1) angeschlossen sind. Die Anzahl an Komponenten (10, 11, 20, 21, 22, 23, 30, 31) umfasst Energieerzeugende Komponenten (10, 11), Energieverbrauchende Komponenten (20, 21, 22, 23) und, optional, Energiespeichernde Komponenten (30, 31). Eine Anzahl an Schutzschaltgliedern (40, 41, 42, 43) ist in zumindest manchen der Kopplungsleitungen (2-9) vorgesehen, wobei jedes Schutzschaltglied (40, 41, 42, 43) ein abschaltbares leistungselektronisches Bauelement umfasst. Ferner ist zumindest ein mit der Busleitung (1) gekoppelter Dämpfungswiderstand zum Abbau von unerwünschter Energie in dem Energieversorgungsnetzwerk vorgesehen, wobei der zumindest eine Dämpfungswiderstand durch die Ansteuerung eines oder mehrerer der Schutzschaltglieder (40, 41, 42, 43) bereitgestellt ist.

## Beschreibung

Die vorliegende Erfindung betrifft ein Energieversorgungsnetzwerk mit einer Busleitung zur Energieverteilung und einer Anzahl an Komponenten, die über eine Kopplungsleitung jeweils entweder direkt oder über einen zugeordneten leistungselektronischen Wandler an die Busleitung angeschlossen sind. Ein jeweiliger leistungselektronischer Wandler kann eine Zwischenkreiskapazität umfassen. Die Anzahl an Komponenten umfasst Energie erzeugende Komponenten, Energie verbrauchende Komponenten und, optional, Energie speichernde Komponenten.

Energieversorgungsnetzwerke werden zur Energieversorgung von Industrieanlagen und Gebäuden genutzt. In Inselnetzen, die z.B. auf Schiffen realisiert werden, wird ein auf Gleichspannung basierendes Energieversorgungsnetzwerk verwendet, da regenerative Erzeuger und Energiespeicher direkt in das Energieversorgungsnetzwerk integriert werden können. Durch den Wegfall von leistungselektronischen Wandlern entstehen weniger Wandlungsverluste, darüber hinaus kann die Zuverlässigkeit und Robustheit der Energieversorgung gesteigert werden.

In vielen Fällen werden elektrische Komponenten, seien es Energieerzeuger, Energieverbraucher oder Energiespeicher, unter Zwischenschaltung eines zugeordneten leistungselektronischen Wandlers an die Busleitung des Energieversorgungsnetzwerks angeschlossen. Leistungselektronische Wandler weisen üblicherweise einen Zwischenkreiskondensator auf. In Verbindung mit Leitungsimpedanzen der Busleitung bilden die Kapazitäten der Zwischenkreiskondensatoren ein schwingungsfähiges System, welches schwer beherrscht werden kann.

Beim Design von Gleichspannungsnetzen für statische Anwendungen, wie z.B. Schiffe, wird vorab eine aufwändige Systemsimulation durchgeführt, um Aussagen zur Stabilität des Energieversorgungsnetzwerks zu erhalten. Gegebenenfalls können beim Design des Energieversorgungsnetzwerks zusätzliche Kapazitäten oder geänderte Leitungsführungen berücksichtigt werden. Dieses Vorgehen ist jedoch lediglich bei nahezu stationären Installationen möglich. Im Umfeld von Industrieanlagen wird jedoch eine größere Flexibilität im Hinblick auf das Entfernen oder Hinzufügen von elektrischen Komponenten gefordert. Ein derartiges Energieversorgungsnetzwerk muss auch stabil betrieben werden können, wenn sich die Topologie des Energieversorgungsnetzwerks oder auch nur einzelne Komponenten verändern.

Beim Design stabiler Energieversorgungsnetzwerke ist man daher bestrebt, eine möglichst kurze Busleitung zur Kopplung verschiedener Energieerzeuger und Energieverbraucher zu realisieren. Eine derartige Anordnung wird auch als verteilter Zwischenkreis bezeichnet. Aufgrund bekannter auftretender Probleme hinsichtlich Systemstabilität gibt es jedoch Limitierungen, was Leitungslänge der Busleitung und der Zwischenkreiskapazität angeht.

Es ist Aufgabe der Erfindung, ein Energieversorgungsnetzwerk anzugeben, welches flexibel um Energie verbrauchende oder Energie erzeugende Komponenten erweitert werden kann. Eine weitere Aufgabe besteht darin, ein Verfahren zum Betreiben eines derartigen Energieversorgungsnetzwerks anzugeben.

Diese Aufgaben werden gelöst durch ein Energieversorgungsnetzwerk gemäß den Merkmalen des Patentanspruches 1 sowie ein Verfahren zum Betreiben eines Energieversorgungsnetzwerks gemäß den Merkmalen des Anspruches 10. Vorteilhafte Ausgestaltungen ergeben sich aus den abhängigen Ansprüchen.

Zur Lösung dieser Aufgabe wird ein Energieversorgungsnetzwerk vorgeschlagen, das eine Busleitung zur Energieverteilung, eine Anzahl an Komponenten und eine Anzahl an Schutzschaltgliedern umfasst.

Die Anzahl an Komponenten ist über eine Kopplungsleitung jeweils entweder direkt oder über einen zugeordneten leistungselektronischen Wandler an die Busleitung angeschlossen. Der leistungselektronische Wandler kann eine Zwischenkreiskapazität umfassen. Er kann z.B. ein Umrichter zur Wandlung einer Eingangsspannung in eine Ausgangsspannung sein, wobei die Eingangsspannung und die Ausgangsspannung ein gleiches oder ein unterschiedliches Spannungsniveau und/oder eine gleiche und/oder eine unterschiedliche Spannungsform aufweisen. Die Anzahl an Komponenten umfasst Energie erzeugende Komponenten, wie z.B. regenerative Erzeuger, herkömmliche Erzeuger, usw., und Energie verbrauchende Komponenten (allgemein: Lasten) und, optional, Energie speichernde Komponenten, wie z.B. Batterien, Kondensatorspeicher und dergleichen.

Die Anzahl an Schutzschaltgliedern ist in zumindest manchen der Kopplungsleitungen angeordnet. Jedes Schutzschaltglied umfasst ein abschaltbares leistungselektronisches Bauelement, wie z.B. ein Halbleiterschaltelement.

Ferner umfasst das Energieversorgungsnetzwerk zumindest einen mit der Busleitung gekoppelten Dämpfungswiderstand zum Abbau von unerwünschter Energie in dem Energieversorgungsnetzwerk. Unerwünschte Energie kann z.B. durch einen Impedanzwechsel entstehen, der aufgrund des zwischen den Leitungsimpedanzen zwischen den Komponenten und den Kapazitäten der Komponenten entstehenden schwingungsfähigen Systems zu Schwingungen in dem Energieversorgungsnetzwerk führt. Beispielsweise kann ein Impedanzwechsel durch die Behandlung eines Fehlerfalles hervorgerufen werden, indem ein oder mehrere der Schutzschaltglieder ihre Schaltposition aufgrund des detektierten Fehlers schlagartig verändern. Der zumindest eine Dämpfungswiderstand wird in dem erfindungsgemäßen Energieversorgungsnetzwerk durch die Ansteuerung eines oder mehrerer der Schutzschaltglieder bereitgestellt, indem ein zur Dämpfung geeigneter Widerstandswert durch Ansteuerung eingestellt wird.

Erfindungsgemäß wird die Anzahl an Schutzschaltgliedern nicht nur zum Schutz der mit der betreffenden Kopplungsleitung gekoppelten Komponenten genutzt, sondern aktiv zur Dämpfung von Schwingungen in dem Energieversorgungsnetzwerk. Durch die Nutzung von vorhandenen Schutzelementen zur aktiven Dämpfung ergibt sich eine Kostenreduktion im Vergleich zum Vorsehen von gesonderten aktiven Filterelementen. Dadurch, dass in der Regel eine Vielzahl an Schutzschaltgliedern in einem Energieversorgungsnetzwerk vorgesehen ist, kann die Stabilität des skalierbaren Energieversorgungsnetzwerkes ohne vorherige Systemsimulation für eine nahezu beliebige Konfiguration des Energieversorgungsnetzwerken und beliebige Komponenten in dem Energieversorgungsnetzwerk sichergestellt werden. Die Ausdehnung eines Energieversorgungsnetzwerks, insbesondere wenn dieses als Gleichspannungsnetzwerk (DC-Netzwerk) ausgelegt ist, ist durch die aktive Dämpfung möglich, da diese dafür sorgt, dass ein vorgegebenes Stabilitätskriterium sicher eingehalten wird.

Insbesondere kann es in einem erfindungsgemäßen Energieversorgungsnetzwerk vermieden werden, jeweilige Zwischenkreiskapazitäten der leistungselektronischen Wandler auf ein Minimum zu reduzieren, so dass herkömmliche leistungselektronische Wandler, d.h. Stromrichter, genutzt werden können. Ebenso ist es nicht erforderlich, die Leitungsinduktivität der Busleitung zu optimieren, insbesondere zu minimieren.

Gemäß einer zweckmäßigen Ausgestaltung ist die Anzahl an Schutzschaltgliedern als Solid-State-Circuit-Breaker (SSCB) ausgebildet, der zumindest zwei anti-seriell verschaltete steuerbare leistungselektronische Bauelemente umfasst. SSCBs werden in herkömmlicher Weise als Schutzschaltglieder zum Schutz der an den jeweiligen Kopplungsleitungen angeschlossenen Komponenten genutzt. SSCBs können auch in der Busleitung der Energieverteilung vorgesehen sein, um das Energieversorgungsnetzwerk in zwei oder mehr Teilnetze aufteilen zu können. Die Eigenschaft von SSCBs besteht darin, dass diese aufgrund der darin verbauten leistungselektronischen Bauelemente auf Halbleiterbasis innerhalb weniger Mikrosekunden einen Fehler detektieren und entsprechend schalten können. Neben der eigentlichen Schutzfunktion übernehmen die SSCBs darüber hinaus noch weitere Aufgaben, wie z.B. eine Vorladung von Zwischenkreiskondensatoren der an eine Kopplungsleitung angeschlossenen Komponenten.

Dementsprechend kann gemäß einer weiteren zweckmäßigen Ausgestaltung die Anzahl an Schutzschaltgliedern zumindest einen weiteren Widerstand umfassen, der oder die jeweils parallel zu dem zumindest einen abschaltbaren leistungselektronischen Bauelement angeordnet sind. Gemäß dem Gedanken der Erfindung können diese als Vorladewiderstände bezeichneten Widerstände auch als Dämpfungsglied eingesetzt werden, indem ein Strom in den Vorladepfad kommutiert und dort durch den Widerstand bedämpft wird. Durch die Möglichkeit, mehrere Widerstände parallel zu dem steuerbaren abschaltbaren leistungselektronischen Bauelement schalten zu können, ist es möglich, eine Dämpfung aktiv zu beeinflussen. Hierdurch besteht die Möglichkeit, verschiedene Widerstandskombinationen zu schalten, wodurch ein Freiheitsgrad zur Bedämpfung über die Zeit entsteht.

Das zumindest eine abschaltbare leistungselektronische Bauelement umfasst, je nach Ausgestaltung des SSCBs einen IGBT (Insulated Gate Bipolar Transistor), einen IGCT (Insulated Gate-Commutated Thyristor), einen GTO (Gate Turn-Off Thyristor) oder einen MOSFET (Metal Oxid Semiconductor Field Effect Transistor). Grundsätzlich können als abschaltbare leistungselektronische Bauelemente all diejenigen steuerbaren Halbleiterschaltelemente zum Einsatz kommen, welche nicht netzgeführt sind.

Eine weitere zweckmäßige Ausgestaltung sieht vor, dass zur Einstellung des Widerstandswerts eines bestimmten Schutzschaltglieds ein in der zugeordneten Kopplungsleitung fließender Strom erfasst und von einer das Schutzschaltglied steuernden Recheneinheit als Eingangsgröße verarbeitet wird. Insbesondere ist es möglich, die in einem Schutzschaltglied von Haus aus vorhandene Strommessmittel, welche zur Feststellung eines Überlastfalls vorhanden sind, zu nutzen. Der in einer Kopplungsleitung fließende Strom kann jedoch auch durch eine von dem Schutzschaltglied unabhängige Strommesseinrichtung erfasst und der Recheneinheit zur Verarbeitung zugeführt werden.

Eine weitere zweckmäßige Ausgestaltung sieht vor, dass zur Einstellung des Dämpfungswiderstands Schaltelemente eines oder mehrerer der Schutzschaltglieder alternierend ein- und ausgeschaltet werden, wobei die Schaltelemente eines Schutzschaltglieds das zumindest eine abschaltbare leistungselektronische Bauelement, und, optional, der oder die schaltbaren Widerstände sind. Das alternierende Ein- und Ausschalten wird insbesondere durch die Recheneinheit bewirkt. Durch das alternierende Ein- und Ausschalten und somit die "Taktung" des Schaltens jeweiliger Schaltelemente kann ein zur Dämpfung geeigneter Widerstand eingestellt werden.

Zur Einstellung des Dämpfungswiderstands eines oder mehrerer der Schutzschaltglieder kann eine jeweilige Steuerspannung des zumindest einen abschaltbaren leistungselektronischen Bauelements in Abhängigkeit einer gemessenen Spannung eingestellt werden. Die Steuerspannung kann beispielsweise die Gate-Spannung des zumindest einen abschaltbaren leistungselektronischen Bauelements sein.

Insbesondere lässt sich die vorliegende Erfindung in Gleichspannungsnetzen einsetzen, bei denen die Busleitung eine DC-Busleitung ist. Das erfindungsgemäß beschriebene Prinzip kann alternativ auch in Wechselspannungsnetzen verwendet werden, bei denen die Busleitung eine AC-Busleitung ist.

Es wird ferner ein Verfahren zum Betreiben eines erfindungsgemäßen Energieversorgungsnetzwerks vorgeschlagen. Bei diesem Verfahren wird zum Abbau von unerwünschter Energie in dem Energieversorgungsnetzwerk zumindest ein mit der Busleitung gekoppelter Dämpfungswiderstand aktiviert, indem durch eine Recheneinheit eines oder mehrere der Schutzschaltglieder angesteuert werden.

Das erfindungsgemäße Verfahren weist die gleichen Vorteile auf, wie diese vorstehend in Verbindung mit dem erfindungsgemäßen Energieversorgungsnetzwerk beschrieben wurden.

Insbesondere werden das oder die Schutzschaltglieder durch die Recheneinheit ein- oder ausgeschaltet.

In einer weiteren Ausgestaltung werden das zumindest eine Abschaltbare leistungselektronische Bauelement eines Schutzschaltglieds und, optional, der oder die schaltbaren Widerstände alternierend ein- und ausgeschaltet. Alternativ oder zusätzlich kann eine Steuerspannung des zumindest einen abschaltbaren leistungselektronischen Bauelements in Abhängigkeit einer gemessenen Spannung durch die Recheneinheit eingestellt werden. Als gemessene Spannung kann eine Eingangsspannung oder die jeweilig erstmalig auftretende Kollektor-Emitter-Spannung im Abschaltmoment verwendet werden.

Zur Einstellung des Widerstandswerts eines bestimmten Schutzschaltglieds kann gemäß einer weiteren zweckmäßigen Ausgestaltung ein in der zugeordneten Kopplungsleitung fließender Strom erfasst und von der Recheneinheit als Eingangsgröße verarbeitet werden.

Es wird weiter ein Computerprogrammprodukt vorgeschlagen, das direkt in den internen Speicher einer digitalen Recheneinheit geladen werden kann und Softwarecodeabschnitte umfasst, mit denen die Schritte des hierin beschriebenen Verfahrens ausgeführt werden, wenn das Produkt auf der Recheneinheit läuft.

Die Recheneinheit ist insbesondere eine Recheneinheit zur Steuerung der Schutzschaltglieder in einem erfindungsgemäßen Energieversorgungsnetzwerk. Das Computerprogrammprodukt kann auf einem Datenträger gespeichert sein, wie z.B. einem USB-Speicherstick, einer DVD oder einer CD-ROM, einem Flash-Speicher, EEPROM oder einer SD-Karte. Das Computerprogrammprodukt kann auch in der Form eines über ein drahtgebundenes oder drahtloses Netzwerk ladbares Signal vorliegen.

Die Erfindung wird nachfolgend näher anhand eines Ausführungsbeispiels in der Zeichnung beschrieben. Es zeigen:
- Fig. 1: eine schematische Darstellung eines beispielhaften, aus dem Stand der Technik bekannten Energieversorgungsnetzwerks;
- Fig. 2: eine schematische Darstellung eines beispielhaften, erfindungsgemäß ausgebildeten Energieversorgungsnetzwerks;
- Fig. 3: eine schematische Darstellung eines Schutzschaltglieds für ein erfindungsgemäßes Energieversorgungsnetzwerk gemäß einer ersten Ausgestaltungsvariante; und
- Fig. 4: eine schematische Darstellung eines Schutzschaltglieds für ein erfindungsgemäßes Energieversorgungsnetzwerk gemäß einer zweiten Ausgestaltungsvariante.

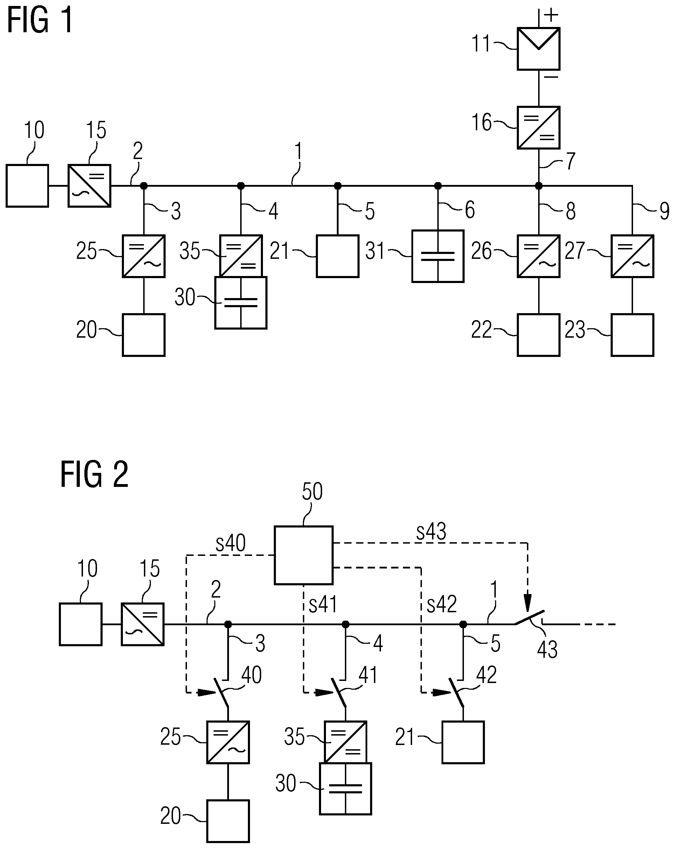

Fig. 1 zeigt eine schematische Darstellung eines beispielhaften, aus dem Stand der Technik bekannten Energieversorgungsnetzwerks. In der nachfolgenden Beschreibung wird davon ausgegangen, dass es sich bei dem Energieversorgungsnetzwerk um ein Gleichspannungsnetzwerk handelt. Dies ist jedoch als nicht einschränkend zu betrachten, da die entsprechenden Überlegungen auch auf ein Wechselspannungsnetz übertragen werden können.

Das in Fig. 1 gezeigte Energieversorgungsnetzwerk umfasst eine Busleitung 1, z.B. in Gestalt einer DC-Verschienung. Die Busleitung 1 kann eine Länge von wenigen Metern bis zu einigen 100 Metern aufweisen. An die Busleitung 1 ist eine Anzahl an Komponenten angeschlossen, wobei die Bezugszeichen 10 und 11 Energie erzeugende Komponenten (kurz: Energieerzeuger oder Erzeuger), die Bezugszeichen 20, 21, 22, 23 Energie verbrauchende Komponenten (kurz: Energieverbraucher) und die Bezugszeichen 30 und 31 Energie speichernde Komponenten (kurz: Energiespeicher oder Speicher) bezeichnen. Jede der Komponenten 10, 11, 20, 21, 22, 23, 30, 31 ist über eine als Kopplungsleitung 2, 3, 4, 5, 6, 7, 8 und 9 (2-9) bezeichnete Leitung jeweils entweder direkt oder über einen zugeordneten leistungselektronischen Wandler 15, 16, 25, 26, 27 und 35 an die Busleitung 1 angeschlossen. Der leistungselektronische Wandler ist in Abhängigkeit der Komponente entweder ein DC/DC-Wandler (z.B. Bezugszeichen 16, 35) oder ein DC/AC-Wandler (z.B. Bezugszeichen 25, 26, 27) oder ein AC/DC-Wandler (z.B. Bezugszeichen 15).

Konkret handelt es sich bei dem Energieerzeuger 10 z.B. um einen herkömmlichen, Wechselspannung erzeugenden Erzeuger, wie z.B. ein Windrad, eine rotierende Maschine. Der Energieerzeuger 11 repräsentiert beispielsweise eine Solaranlage, die ausgangsseitig eine Gleichspannung bereitstellt. Dementsprechend ist der Energieerzeuger 10 über einen AC/DC-Wandler 15 und die Kopplungsleitung 2 an die Busleitung 1 angeschlossen, während der Energieerzeuger 11 über einen DC/DC-Wandler 16 und die Kopplungsleitung 7 an die Busleitung angeschlossen ist.

Die Energieverbraucher 20, 22, 23 sind jeweils über einen DC/AC-Wandler 25, 26, 27 und zugeordnete Kopplungsleitungen 3, 8, 9 an die Busleitung 1 angeschlossen. Bei den Energieverbrauchern 20, 22, 23 kann es sich beispielsweise um industrielle Maschinen, wie z.B. Roboter und dergleichen, handeln. Demgegenüber ist der Energieverbraucher 21 über die Kopplungsleitung 5 direkt, d.h. ohne zwischengeschalteten leistungselektronischen Wandler, an die Busleitung 1 angeschlossen.

In entsprechender Weise ist der Energiespeicher 31 über die Kopplungsleitung 6 direkt an die Busleitung 1 angeschlossen, wohingegen der Energiespeicher 30 über einen DC/DC-Wandler 35 und die Kopplungsleitung 4 an die Busleitung 1 angeschlossen ist.

Wie dem Fachmann bekannt ist, umfassen die leistungselektronischen Wandler 15, 16, 25, 26, 27, 35 in der Regel eine Zwischenkreiskapazität (nicht dargestellt). In Verbindung mit den Leitungsimpedanzen zwischen den Zwischenkreiskondensatoren der leistungselektronischen Wandler 15, 16, 25, 26, 27, 35 sowie dem Energiespeicher 31 ergibt sich ein schwingfähiges System. Beim Auftreten eines Fehlerfalls oder dem Schalten einer der Lasten 20, 21, 22, 23 können Impedanzwechsel auftreten, welche Schwingungen in dem Energieversorgungsnetzwerk nach sich ziehen. Dadurch kann nicht nur in dem Energieversorgungsnetzwerk vorhandene und nicht näher dargestellte Messtechnik in ungünstiger Weise beeinflusst werden, sondern es kann auch die Funktionsfähigkeit anderer Komponenten durch die Schwingungen in nachteiliger Weise beeinflusst werden.

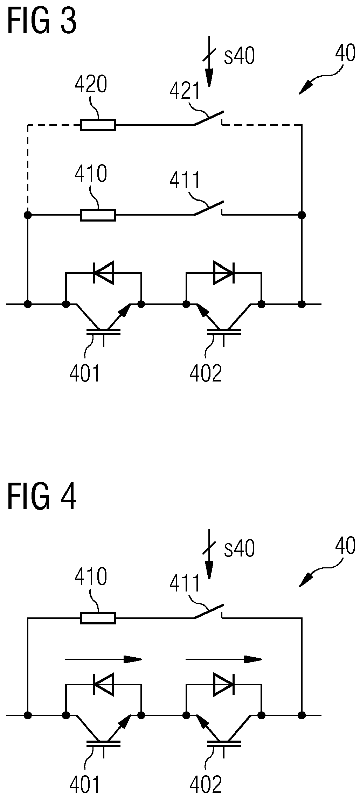

Fig. 2 zeigt eine erfindungsgemäße Erweiterung des in Fig. 1 beschriebenen Energieversorgungsnetzwerks, wobei lediglich noch der links des Energiespeichers 31 beschriebene Teil dargestellt ist. Zum Schutz der verschiedenen Komponenten sind in den jeweiligen Kopplungsleitungen 3, 4, 5 sowie der Busleitung 1 selbst Schutzschaltglieder 40, 41, 42, 43 vorgesehen. Diese sind in der Gestalt von grundsätzlich aus dem Stand der Technik bekannten Solid-State-Circuit-Breakern (SSCB), welche zumindest zwei anti-seriell verschaltete steuerbaren leistungselektronische Bauelemente 401, 402 (siehe Figuren 3 und 4) umfassen, ausgebildet. Durch das Vorsehen der Schutzschaltglieder 40, 41, 42, 43 kann eine Selektivität sichergestellt werden, wodurch in einem Fehlerfall eine hohe Kurzschlussleistung und hohe Spitzenströme im Fehlerfall behandelt werden können. Die genannten Schutzschaltglieder 40, 41, 42, 43 können innerhalb kurzer Zeit, in der Regel weniger Mikrosekunden, einen Fehler detektieren und entsprechend behandeln. Unter einer Behandlung eines Fehlers wird in der Regel ein Öffnen der Kopplungsleitung durch das den Fehler detektierende Schutzschaltglied verstanden, so dass die dem Schutzschaltglied folgenden, fehlerhaften Komponenten von der Busleitung 1 und den anderen Komponenten elektrisch getrennt werden. Neben der eigentlichen Schutzfunktion übernehmen die SSCBs in der Regel noch weitere Aufgaben, wie die Vorladung einer angeschlossenen Lastzone.

In den Figuren 3 und 4 ist ein dem Fachmann prinzipiell bekannter Aufbau zweier Ausführungsbeispiele von Schutzschaltgliedern, jeweils in Gestalt einer SSCB, dargestellt. Hierbei wird beispielhaft auf das Schutzschaltglied 40 Bezug genommen.

Wie oben bereits beschrieben, umfasst das Schutzschaltglied 40 zwei anti-seriell verschaltete steuerbare leistungselektronische Bauelemente 401, 402, welche vorliegend als IGBTs ausgebildet sind. Alternativ könnten als steuerbare leistungselektronische Bauelemente 401, 402 auch IGCTs, GTOs oder MOSFETs verwendet werden. Parallel zu der Serienschaltung der beiden IGBTs umfasst die Variante gemäß Fig. 3 zwei parallel geschaltete schaltbare Widerstände, welche jeweils aus einer Reihenschaltung aus einem Widerstand 410 bzw. 420 und einem steuerbaren Schaltelement 411 bzw. 421 bestehen. Das Ausführungsbeispiel gemäß Fig. 4 zeigt lediglich einen abschaltbaren Widerstand, bestehend aus der Serienschaltung des Widerstands 410 und dem steuerbaren Schaltelement 411, der der Serienschaltung der IGBTs 401, 402 parallelgeschaltet ist.

Prinzipiell kann das Schutzschaltglied 40 eine beliebige Anzahl an parallel geschalteten schaltbaren Widerständen umfassen.

Die Ansteuerung der IGBTs 401, 402 sowie der Anzahl an Schaltelementen 411, 421 erfolgt mittels eines Ansteuersignals s40 einer lediglich beispielhaft übergeordneten Recheneinheit 50, wobei das Ansteuersignal s40 entsprechend der Anzahl an zu steuernden Schaltelementen in der Praxis eine Vielzahl an parallel ausgesendeten und unterschiedlichen Schaltsignalen umfassen kann.

Die schaltbaren Widerstände 410, 420 (Fig. 3) bzw. 410 (Fig. 4) werden typischerweise für die Vorladung einer kapazitiven Last verwendet, bis eine minimale Spannungsdifferenz zwischen der auf der Busleitung 1 vorherrschenden Spannung und der ausgangsseitig des leistungselektronischen Wandlers bzw. der daran angeschlossenen Last vorherrschenden Spannung vorliegt. Dann erfolgt ein Leitendschalten der IGBTs 401, 402. In einem Fehlerfall werden die IGBTs sperrend geschaltet, während der schaltbare Widerstand 410, 420 (Fig. 3) bzw. 410 (Fig. 4) leitend geschaltet bleibt, bis ein abzuleitender Strom eine unkritische Größe erreicht.

Dieses von SSCBs bekannte Verhalten wird nunmehr zum Abbau von unerwünschter Energie in dem Energieversorgungsnetzwerk genutzt, indem mittels einer Anzahl der Schutzschaltglieder ein Dämpfungswiderstand in das Energieversorgungsnetzwerk eingebracht wird. Die Schutzschaltglieder werden somit aktiv zur Dämpfung von Schwingungen in dem Energieversorgungsnetzwerk genutzt. Dabei kann eine in den Figuren nicht näher gezeigte und beschriebene Strommesseinrichtung eines oder mehrerer der Schutzschaltglieder zur Erfassung eines jeweiligen Stroms, welcher oder welche als Eingangsgröße für die in Fig. 2 gezeigte Recheneinheit 50 zur Realisierung eines aktuellen Schwingungsdämpfers genutzt werden, wobei die Recheneinheit 50 in Abhängigkeit eines gemessenen Stroms (oder mehrerer gemessener Ströme) dann die schaltbaren Elemente eines jeweiligen Schutzschaltglieds mittels jeweiliger Steuersignale s40, s41, s42, s43 alternierend ein- und ausschaltet, um dadurch die in dem Energieversorgungsnetzwerk auftretende Schwingung zu dämpfen.

Zur Realisierung eines Dämpfungswiderstandes können die steuerbaren leistungselektronischen Bauelemente 401, 402 im aktiven Bereich betrieben werden. Bei dieser Ausgestaltungsvariante wird die Steuerspannung (Gate-Spannung) der IGBTs abgesenkt, um den aktiven Bereich der steuerbaren leistungselektronischen Bauelemente zu nutzen. Hierzu kann je nach Stromflussrichtung entweder das leistungselektronische Bauelement 401 oder das leistungselektronische Bauelement 402 durch die Recheneinheit 50 mittels jeweiliger Steuersignale s40, s41, s42, s43 angesteuert werden.

Es versteht sich, dass zur aktiven Schwingungsdämpfung in dem Energieversorgungsnetzwerk wahlweise ein Schutzschaltglied oder eine Anzahl an Schutzschaltgliedern des Energieversorgungsnetzwerks durch die Recheneinheit 50 angesteuert werden kann.

In einer alternativen oder zusätzlichen Variante können die auch als Vorladewiderstände bezeichneten Widerstände 410, 420 (Fig. 3) bzw. 410 (Fig. 4) als Dämpfungsglied genutzt werden. Hierzu wird der Hauptstrompfad durch die leistungselektronischen Bauelemente 401, 402 durch Ansteuerung geöffnet und der Strom über die abschaltbaren Widerstände 410, 420 (Fig. 3) oder 410 (Fig. 4) geführt. Der Strom kommutiert damit in den sog. Vorladepfad und wird durch die oder den Widerstand bedämpft.

Durch die parallele Anordnung verschiedener Widerstandskombinationen kann die Dämpfung aktiv beeinflusst werden. Dieses Prinzip ist identisch zur Nutzung des Vorladewiderstands in Verbindung mit der alternierenden Steuerung der Schaltelemente 411, 421 (Fig. 3), wobei durch die verschiedenen Widerstandskombinationen ein zusätzlicher Freiheitsgrad zur reinen Widerstandssteuerung über die Zeit erzeugt wird.

Durch Kombination der genannten Varianten ergibt sich ein höherer Freiheitsgrad des Eingriffes. Neben der aktiven Dämpfung im Betrieb kann die Beeinflussung von benachbarten Lasten im Fehlerfall, beispielsweise auch bei einer Abschaltung einzelner Komponenten (z.B. Energieverbraucher) reduziert werden.

Das beschriebene Prinzip kann auch zum pro-aktiven Dämpfen genutzt werden, indem die leistungselektronischen Bauelemente 401, 402 im aktiven Bereich betrieben werden. Dabei kann die Steuerspannung (Gate-Spannung der IGBTs) in Abhängigkeit der Eingangsspannung oder der jeweilig erstmalig auftretenden Kollektor-Emitter-Spannung im Abschaltmoment variiert werden. Dadurch kann das Abklingverhalten des Stroms aktiv beeinflusst werden, was zur Reduktion von Fehlauslösungen der benachbarten Schaltelemente der an andere Kopplungsleitungen angeschlossenen Komponenten führt.

Neben der Möglichkeit, vorhandene Elemente (die Schutzschaltglieder) zur Dämpfung in einem Energieversorgungsnetzwerk nutzen zu können, existiert keine Limitierung der Ausdehnung des Energieversorgungsnetzwerks aufgrund eines vorherrschenden Stabilitätskriteriums. Auch andere Maßnahmen, wie die Reduktion von Zwischenkreiskapazitäten oder die Verringerung von Leitungsinduktivitäten der Busleitung, brauchen bei dem vorliegenden Energieversorgungsnetzwerk nicht genutzt werden, obwohl eine Kombination grundsätzlich möglich ist.

## Patentansprüche

1. Energieversorgungsnetzwerk, umfassend:
- eine Busleitung (1) zur Energieverteilung;
- eine Anzahl an Komponenten (10, 11, 20, 21, 22, 23, 30, 31), die über eine Kopplungsleitung (2-9) jeweils entweder direkt oder über einen zugeordneten leistungselektronischen Wandler (15, 16, 25, 26, 27, 35), der eine Zwischenkreiskapazität umfassen kann, an die Busleitung (1) angeschlossen sind, wobei die Anzahl an Komponenten (10, 11, 20, 21, 22, 23, 30, 31) Energie erzeugende Komponenten (10, 11), Energie verbrauchende Komponenten (20, 21, 22, 23) und, optional, Energie speichernde Komponenten (30, 31) umfasst;
- eine Anzahl an Schutzschaltgliedern (40, 41, 42, 43) in zumindest manchen der Kopplungsleitungen (2-9), wobei jedes Schutzschaltglied (40, 41, 42, 43) ein abschaltbares leistungselektronisches Bauelement umfasst;
- zumindest einen mit der Busleitung (1) gekoppelten Dämpfungswiderstand zum Abbau von unerwünschter Energie in dem Energieversorgungsnetzwerk, wobei der zumindest eine Dämpfungswiderstand durch die Ansteuerung eines oder mehrerer der Schutzschaltglieder (40, 41, 42, 43) bereitgestellt ist.

2. Energieversorgungsnetzwerk nach Anspruch 1, bei dem die Anzahl an Schutzschaltgliedern (40, 41, 42, 43) als Solid-State-Circuit-Breaker ausgebildet ist, der zumindest zwei anti-seriell verschaltete steuerbare leistungselektronische Bauelemente (401, 402) umfasst.

3. Energieversorgungsnetzwerk nach Anspruch 1 oder 2, bei dem die Anzahl an Schutzschaltgliedern (40, 41, 42, 43) zumindest einen schaltbaren Widerstand (410, 411; 420, 421) umfasst, der oder die jeweils parallel zu dem zumindest einen abschaltbaren leistungselektronischen Bauelement angeordnet sind.

4. Energieversorgungsnetzwerk nach einem der vorhergehenden Ansprüche, bei dem das zumindest eine abschaltbare leistungselektronische Bauelement (401, 402) ein IGBT, IGCT, GTO oder MOSFET ist.

5. Energieversorgungsnetzwerk nach einem der vorhergehenden Ansprüche, bei dem zur Einstellung des Widerstandswerts eines bestimmten Schutzschaltglieds (40, 41, 42, 43) ein in der zugeordneten Kopplungsleitung (2-9) fließender Strom erfasst und von einer das Schutzschaltglied (40, 41, 42, 43) steuernden Recheneinheit (50) als Eingangsgröße verarbeitet wird.

6. Energieversorgungsnetzwerk nach einem der vorhergehenden Ansprüche, bei dem zur Einstellung des Dämpfungswiderstands Schaltelemente eines oder mehrerer der Schutzschaltglieder (40, 41, 42, 43), insbesondere durch die Recheneinheit (50), alternierend ein- und ausgeschaltet werden, wobei Schaltelemente eines Schutzschaltglieds das zumindest eine abschaltbare leistungselektronische Bauelement (401, 402) und, optional, der oder die schaltbaren Widerstände (410, 411; 420, 421) sind.

7. Energieversorgungsnetzwerk nach einem der vorhergehenden Ansprüche, bei dem zur Einstellung des Dämpfungswiderstands eines oder mehrerer der Schutzschaltglieder (40, 41, 42, 43) eine Steuerspannung des zumindest einen abschaltbaren leistungselektronischen Bauelements (401, 402) in Abhängigkeit einer gemessenen Spannung, insbesondere durch die Recheneinheit (50), eingestellt wird.

8. Energieversorgungsnetzwerk nach einem der Ansprüche 1 bis 7, bei dem die Busleitung (1) eine DC-Busleitung ist.

9. Energieversorgungsnetzwerk nach einem der Ansprüche 1 bis 7, bei dem die Busleitung (1) eine AC-Busleitung ist.

10. Verfahren zum Betreiben eines Energieversorgungsnetzwerks gemäß einem der Ansprüche 1 bis 9, bei dem
zum Abbau von unerwünschter Energie in dem Energieversorgungsnetzwerk zumindest ein mit der Busleitung (1) gekoppelter Dämpfungswiderstand aktiviert wird, indem durch eine Recheneinheit (50) eines oder mehrere der Schutzschaltglieder (40, 41, 42, 43) angesteuert werden.

11. Verfahren nach Anspruch 10, bei dem das oder die Schutzschaltglieder (40, 41, 42, 43) durch die Recheneinheit (50) ein- und ausgeschaltet werden.

12. Verfahren nach Anspruch 10 oder 11, bei dem das zumindest eine abschaltbare leistungselektronische Bauelement (401, 402) eines Schutzschaltglieds (40, 41, 42, 43) und, optional, der oder die schaltbaren Widerstände (410, 411; 420, 421) alternierend ein- und ausgeschaltet werden.

13. Verfahren nach einem der Ansprüche 10 bis 12, bei dem eine Steuerspannung des zumindest einen abschaltbaren leistungselektronischen Bauelements (401, 402) in Abhängigkeit einer gemessenen Spannung durch die Recheneinheit (50) eingestellt wird.

14. Verfahren nach einem der Ansprüche 10 bis 13, bei dem zur Einstellung des Widerstandswerts eines bestimmten Schutzschaltglieds (40, 41, 42, 43) ein in der zugeordneten Kopplungsleitung (2-9) fließender Strom erfasst und von der Recheneinheit (50) als Eingangsgröße verarbeitet wird.

15. Computerprogrammprodukt, das direkt in den internen Speicher einer digitalen Recheneinheit geladen werden kann und Softwarecodeabschnitte umfasst, mit denen die Schritte gemäß Anspruch 10 bis 14 ausgeführt werden, wenn das Produkt auf der Recheneinheit (50) läuft.
